# EUROPEAN PATENT SPECIFICATION

(11) **EP 1 503 298 B1**
(45) Date of publication and mention of the grant of the patent: **16.04.2008**
(21) Application number: 03017347.0
(22) Date of filing: 31.07.2003
(51) Int. Cl.: G06F 17/30

(54) **Method and computer system for archiving data objects**
Methode und Computersystem zum Archivieren von Datenobjekten
Procédé et système informatique pour l'archivage des objets de données

(43) Date of publication of application: 02.02.2005
(73) Proprietor: SAP AG, 69190 Walldorf (DE)
(72) Inventor: Pfeifer, Marcus, 69117 Heidelberg (DE); Brinkmoeller, Bernhard, 69168 Wiesloch (DE)
(74) Representative: Rocke, Carsten

(56) References cited:
- EP-A- 1 283 477
- EP-A- 1 324 221
- US-A- 5 765 173
- STEFANI H: "Datenarchivierung mit SAP" SAP-INFO, SAP AG, CORPORATE COMMUNICATIONS, WALLDORF, DE, May 2002 (2002-05), pages 1-3,35-40,57,63-75,84-85,211-2-12, XP002266517 ISSN: 1430-5526

## Description

### Field of the Invention

The present invention generally relates to electronic data processing, and more particularly, relates to methods, computer program products and systems for archiving objects.

### Background of the Invention

Some organizations use archiving systems for archiving data apart from their operational systems. The operational systems, such as, for example, enterprise resource planning (ERP) systems or customer relationship management (CRM) systems or other application systems, can delete archived data objects from their respective databases so that more hard disk storage can be made available, or for some other purpose. An archiving system can include a simple list of files or files organized under a directory or catalog structure. Archived data objects may be retrieved from the archiving systems at any later time.

Typically, the amount of data stored in an archiving system increases continuously because archiving is usually performed at regular intervals (e.g., monthly or quarterly). In some cases data is stored redundantly in the operational systems. For example, data of a customer order in an ERP system may be replicated to a corresponding CRM system. Further, some data are not important for archiving.

Archiving systems usually provide tools to flag data objects for archiving. Once an archiving run is performed, the flagged data objects are archived as a whole in the archiving system. That is, in case of data that are stored redundantly in more than one flagged data structure, the archiving system also stores redundant data. Further, data that is important within the operational systems, such as, for example, the history of status flags for a customer order, is not important from an archiving point of view. However, the data is archived when stored in a flagged data structure.

EP 1 283 477 A1 discloses a known computer implemented method for archiving data objects. The data objects have an object type and at least one attribute. In an archiving step the at least one attribute is archived together with the data object.

A general aspect of the invention is to provide a method, computer system and computer program product for reducing the amount of data to be archived.

This is achieved by embodiments of the invention as described by the independent claims by using a control structure that allows one to define specific attributes of a data structure in an operational system as being subject to archiving for data objects of a specific data type. An archiving program is able to select and archive the specific attributes.

Thus, archiving of redundant or less important data can be avoided or reduced. Therefore, the storage space needed for archiving can be reduced. By reducing the amount of data to be archived the corresponding time period for an archiving run can be shortened as less data need to be extracted from operational data structures and stored in archiving structures. Also the access to archived data becomes faster as less data need to be retrieved when retrieving a data abject from the archiving structure.

Further, the control structure allows one a definition of attributes for archiving that is more flexible than flagging a whole data structure for archiving.

The aspects of the invention will be realized and attained by means of the elements and combinations particularly pointed out in the appended claims.

It is to be understood that both the foregoing general description and the following detailed description are exemplary and explanatory only and are not restrictive of the invention as described.

### Brief Description of the Drawings

- FIG. 1: is a simplified block diagram of a computer system for archiving; and
- FIG. 2: illustrates a specific embodiment for archiving a service document.

### Detailed Description of the Invention

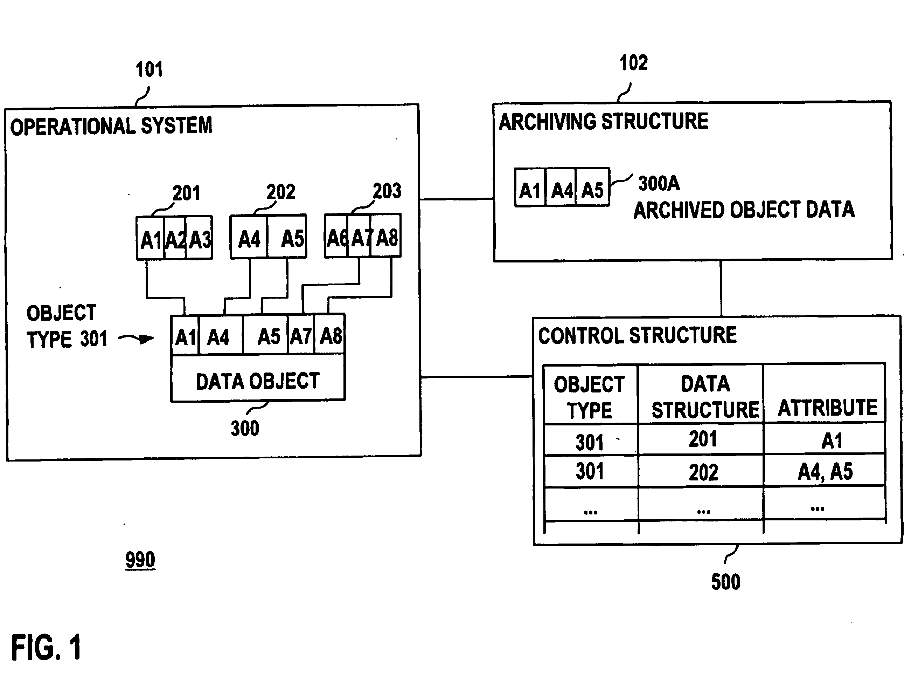

FIG. 1 is a simplified block diagram of a computer system 990 for archiving.

The computer system 990 can include an operational system 101, such as a database system, a file system or an application system, that stores data. Typically, the data is stored in data (storage) structures 201, 202, 203. For example, data structures can be relational database tables, tree structures using pointers, files, or any other structure that is appropriate to persist data of the operational system 101. In general, each data structure 201, 202, 203 can store multiple attributes with respect to a data record. In the embodiment of FIG. 1, the first data structure 201 stores the attributes A1, A2, A3, the second data structure 202 stores the attributes A4, A5, and the third data structure 203 stores the attributes A6, A7, and A8. For example, in the case of using relational database tables to implement the data structures, the data structures could have relationships. That is a data record of the first data structure 201 could relate to corresponding data records of the second and third data structures 202, 203.

In general, operational systems, such as ERP or CRM systems, use data objects. Examples of data objects are accounting documents, production orders, customers, suppliers, accounts or any other data object that can be defined by an application. Typically, each data object 300 has a specific object type 301. The object type 301 can define the structure of the data object 300. In the embodiment of FIG. 1, the object type 301 includes the attributes A1, A4, A5, A7, and A8. The values of the attributes for the data object 300 are stored in the respective data records of the data structures 201, 202, and 203, which is illustrated by the connection lines between the attributes of the object type 301 and the attributes of the respective data structures.

In other words, in the operational system 101 the persistence of data objects is achieved by storing the attribute values of the data objects 300 in corresponding data structures that relate to each other so that records in each data structure can be clearly associated with the corresponding data objects 300.

To free memory in the persistence layer of the operational system 901, the archiving program can archive data of specific data objects 300 in an archiving structure 102 and delete the specific data objects from the operational system 101 after the archiving. The operational system 101 can communicate with the archiving structure 102 through corresponding interfaces illustrated by the connection line in between.

In an archiving run the computer system 990 identifies the data object 300 for archiving from the operational system 101. For example, this can be achieved by using a table or another appropriate structure to specify all object types of the operational system that are subject to archiving. Alternatively, any other appropriate attribute of the data object, such as an archiving flag, can be used to identify the data objects for archiving. Based on this information an archiving program can select all data objects for archiving.

The computer system 990 has a control structure 500 that defines for each object type 301 that is specified as subject to archiving, which attributes of the object type 301 are to be archived. In the embodiment of FIG. 1, the control structure 500 defines the attribute A1 of the first data structure 201 and the attributes A4, A5 of the second data structure 202 as being subject to archiving for any data object of the object type 301. The control structure 500 has appropriate interfaces to communicate with the operational system 101 and the archiving structure 102. The corresponding interfaces are illustrated by the corresponding connection lines. Alternatively, those skilled in the art can implement the control structure 500 as an integral part of the operational system 101 or of an archiving system that includes the archiving structure 102.

Once the data object 301 is identified for archiving, the archiving program evaluates the control structure 500 with respect to the object type 301 of the data object 300. In the embodiment, the evaluation identifies the attributes A1, A4 and A5 of the data object 300 to be archived.

The archiving program selects the corresponding attribute values from the data object 300 and stores the selected attributes as archived object data 300A in the archiving structure 102. The archiving structure 102 can be implemented as a relational table, file, tree structure, or any other data structure that is appropriate to store structured data.

Thus, the computer system 990 uses the control structure 500 to select only a part of the data object's attributes for archiving. The computer system is able to store only the attributes being flagged as relevant for archiving by selecting the relevant attributes from the corresponding data structure. In general, only attributes that may have some significance for the future are listed in the control structure 500 because these attributes are likely to be retrieved from the archiving system at a later point in time. Redundant or unimportant data is suppressed during the archiving run. This leads to smaller amounts of data stored in the archiving system resulting in less memory usage and faster access to the archived data.

Further the use of the control structure 500 allows one to define any subset of attributes of a data object to be relevant for archiving, thus brining more flexibility to the user.

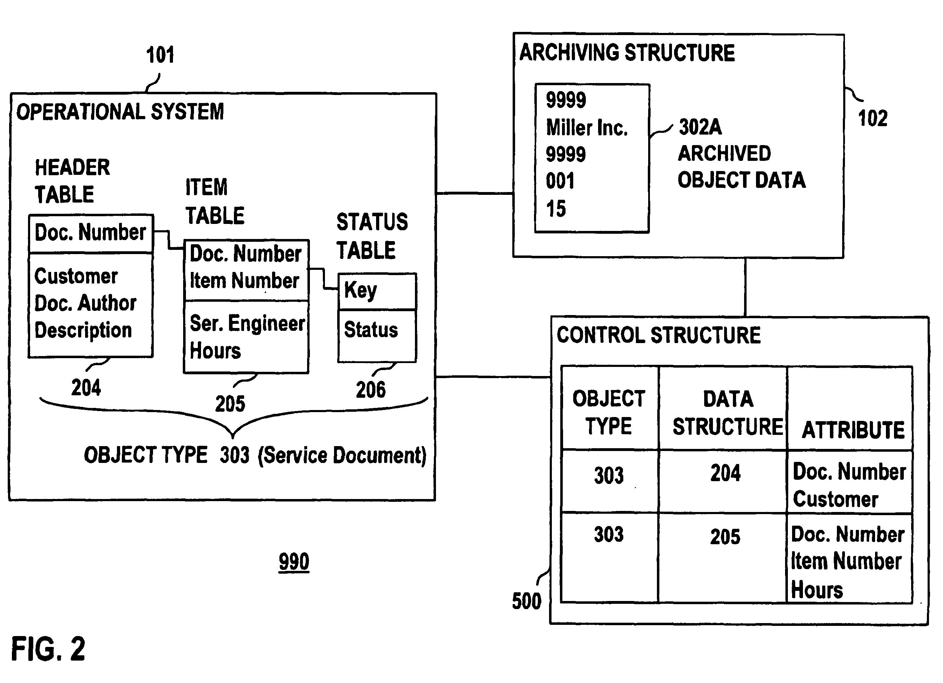

The operational system 101, archiving structure 102, and control structure 500 can be implemented on one or more computing devices of the computer system 990. In case of multiple computing devices, communication between computing devices can be achieved through a network, such as a local area network (LAN), wide area network (WAN), or the Internet, or any other appropriate connection. FIG. 2 illustrates a specific embodiment for archiving a service document by using the computer system 990.

For example, a service document can be used in the operational system 101 to book the number of service hours (Hours) spent by a service engineer for specific service activities. In the embodiment of FIG. 2, the structure of a Service Document is defined by the object type 303. The object type 303 includes the attributes Doc. Number (document number), Customer, Doc. Author (document author), Description, Doc. Number, Item Number, Ser. Engineer (service engineer), Hours, Key, Status. In the embodiment, these attribute values for each service document are stored in tables of a relational database.

The header table 204 includes the document number as key. The keys of the various tables are illustrated by separating the key attribute(s) from the further attributes of the corresponding table. Further attributes of the header table 204 in the embodiment are Customer, Doc. Author, and Description. The Customer attribute can store values of the customers for which the service activities are performed. The Doc. Author can be the name of a clerk of the service company being in charge of the service document. The Description attribute may include a short text for specifying the service activities. The key of the header table relates to the Doc. Number attribute of the item table 205. The item table stores details about the various service activities. Therefore, the key of the item table 205 also includes the Item Number attribute. Further attributes of the item table 205 are the name of the service engineer (Ser. Engineer) and the number of hours spent by the service engineer on the activities of the corresponding item numbers. The key of the item table 205 relates to the key of the status table 206. That is, for each item number in the item table a corresponding record exists in the status table. The status is stored in the further Status attribute of the status table. For example, the status can be "order received", "activity in progress", "activity finished", or "activity approved by customer". For example, the operational system can be configured in a way that only document numbers where each item has the status "activity approved by customer" become subject to archiving.

In this embodiment, the control structure 500 does not refer to the status table 206 at all with respect to documents having the object type 303 of a service document. For archiving, the status is not important because to archive a service document all items need to have the "approved" status. However, important attributes of the header and item tables 204, 205 are selected for archiving using the control structure.

In the first data row of the control structure 500, the attributes Doc. Number and Customer of the header table 204 are defined as subjects to archiving for service documents of object type 303. For example, for compliance with a data protection act it may be not allowed to store the personal data of the Doc. Author for such a long time as it is the case in an archiving structure. The description might be unimportant, and is left out, too, in the embodiment. In the second data row of the control structure 500, the attributes Doc. Number, Item Number and Hours of the item table 205 are defined as subjects to archiving for service documents of the object type 303. Of course, the Doc. Number attribute could be left out because it is redundant to the same attribute of the header table. The name of the service engineer is probably not important when, for example, the document is checked at a later point in time to compare the number of hours to the booked value. This is true when, for example, all service engineers of the company charge their hours at the same rate.

The archiving program reads from the control structure 500, which attributes have to be considered during the archiving run. The corresponding attribute values are then retrieved from the corresponding operational system tables for each service document of the object type 303 and finally stored in the archiving structure 102. The embodiment of FIG. 2 shows the archived object data 302A that are stored for one specific service document in accordance with the control structure 500. This specific service document has the Doc. Number "9999" for the Customer "Miller Inc." and shows that "15" Hours were spent for an activity that corresponds to Item Number "001".

The embodiment of FIG. 2 is based on relational database tables. Those skilled in the art can implement this embodiment by using other data structures or archiving structures as pointed out in the description of FIG. 1.

Embodiments of the invention can be implemented in digital electronic circuitry, or in computer hardware, firmware, software, or in combinations of them. The invention can be implemented as an archiving computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. An archiving computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer implemented method for archiving data objects (300) which have an object type (301), where the object type (301) includes specific attributes (A1, A4, A5, A7, A8) that can assume different attribute values, and where the attribute values are stored in at least one data structure (201, 202, 203) of an operational system (101), the method comprising the steps of:
providing a control structure (500) in which for each object type (301) that is specified as subject to archiving, a set of at least one attribute (A1, A4, A5) is defined, all attributes (A1, A4, A5) of said set being also included in the respective object type (301);
identifying a data object (300) for archiving by a computer system (990);
by an archiving program which uses the control structure (500), selecting attribute values (300A) from the data objects (300) of the operational system (101) for the set of attributes (A1, A4, A5) which is defined for the object type (301) of the identified data object (300); and
archiving only the selected attribute values as attribute values (300A) in an archiving structure (102).

2. The method of claim 1, wherein the object type (301) defines the data object's (300) structure.

3. The method of claims 1 or 2, wherein the at least one data structure (201, 202, 203) and the archiving structure (102) are implemented as relational database tables.

4. The method of claims 1 or 2, wherein the at least one data structure (201, 202, 203) and the archiving structure (102) are implemented as tree structures.

5. The method of claims 1 or 2, wherein the at least one data structure (201, 202, 203) and the archiving structure (102) are implemented as files.

6. A computer system (990) for archiving data objects (300) having an object type (301), where the object type (301) includes specific attributes (A1, A4, A5, A7, A8) that can assume different attribute values, and where the attribute values are stored in at least one data structure (201, 202, 203) of an operational system (101) of the computer system (990), the computer system (990) further comprising:
a control structure (500) in which for each object type (301) that is specified as subject to archiving, a set of at least one attribute (A1, A4, A5) is defined, all attributes (A1, A4, A5) of said set being also included in the respective object type (301);
an archiving program which uses the control structure (500) and which selects attribute values (300A) from the data objects (300) of the operational system (101) for the set of attributes (A1, A4, A5) which is defined for the object type (301) of the identified data object (300); and
an archiving structure (102) for archiving only the selected attribute values as attribute values (300A).

7. The system of claim 6, wherein the object type (301) defines the structure of the data object (300).

8. The system of claim 7, wherein the operational system (101) is an application system.

9. The system of any one of the claims 6 to 8, wherein the at least one data structure (201, 202, 203) and the archiving structure (102) are stored on one computing device.

10. The system of any one of the claims 6 to 8, wherein the at least on data structure (201, 202, 203) and the archiving structure (102) are stored on different computing devices that communicate with each other.

11. An archiving computer program product for archiving data objects (300) in a computer system (990) comprising a plurality of instructions that when loaded into a memory of the computer system (990) cause at least one processor of the computer system (990) to execute the steps of any one of the claims 1 to 5.

## Patentansprüche

1. Computerimplementiertes Verfahren zum Archivieren von Datenobjekten (300), die einen Objekttyp (301) aufweisen, wobei der Objekttyp (301) spezifische Attribute (A1, A4, A5, A7, A8) enthält, die verschiedene Attributwerte annehmen können, und wobei die Attributwerte in wenigstens einer Datenstruktur (201, 202, 203) eines Betriebssystems (101) gespeichert sind, wobei das Verfahren die nachfolgenden Schritte umfasst:
Bereitstellen einer Steuer- bzw. Regelstruktur (500), in der für jeden Objekttyp (301), der als Subjekt zur Archivierung spezifiziert ist, ein Satz von wenigstens einem Attribut (A1, A4, A5) definiert ist, wobei alle Attribute (A1, A4, A5) des Satzes auch in dem jeweiligen Objekttyp (301) enthalten sind;
Identifizieren eines Datenobjektes (300) zum Archivieren durch ein Computersystem (990);
durch ein die Steuer- bzw. Regelstruktur (500) verwendendes Archivierungsprogramm erfolgendes Auswählen von Attributwerten (300A) aus den Datenobjekten (300) des Betriebssystems (101) für den Satz von Attributen (A1, A4, A5), der für den Objekttyp (301) des identifizierten Datenobjektes (300) definiert ist; und
Archivieren nur der ausgewählten Attributwerte als Attributwerte (300A) in einer Archivierungsstruktur (102).

2. Verfahren nach Anspruch 1, wobei der Objekttyp (301) die Struktur des Datenobjektes (300) definiert.

3. Verfahren nach Ansprüchen 1 oder 2, wobei die wenigstens eine Datenstruktur (201, 202, 203) und die Archivierungsstruktur (102) als Tabellen einer relationalen Datenbank implementiert sind.

4. Verfahren nach Ansprüchen 1 oder 2, wobei die wenigstens eine Datenstruktur (201, 202, 203) und die Archivierungsstruktur (102) als Baumstrukturen implementiert sind.

5. Verfahren nach Ansprüchen 1 oder 2, wobei die wenigstens eine Datenstruktur (201, 202, 203) und die Archivierungsstruktur (102) als Dateien implementiert sind.

6. Computersystem (990) zum Archivieren von Datenobjekten (300), die einen Objekttyp (301) aufweisen, wobei der Objekttyp (301) spezifische Attribute (A1, A4, A5, A7, A8) enthält, die verschiedene Attributwerte annehmen können, und wobei die Attributwerte in wenigstens einer Datenstruktur (201, 202, 203) eines Betriebssystems (101) des Computersystems (990) gespeichert sind, wobei das Computersystem (990) des Weiteren umfasst:
eine Steuer- bzw. Regelstruktur (500), in der für jeden Objekttyp (301), der als Subjekt zur Archivierung spezifiziert ist, ein Satz von wenigstens einem Attribut (A1, A4, A5) definiert ist, wobei alle Attribute (A1, A4, A5) des Satzes auch in dem jeweiligen Objekttyp (301) enthalten sind;
ein Archivierungsprogramm, das die Steuer- bzw. Regelstruktur (500) verwendet und Attributwerte (300A) aus den Datenobjekten (300) des Betriebssystems (101) für den Satz von Attributen (A1, A4, A5) auswählt, der für den Objekttyp (301) des identifizierten Datenobjektes (300) definiert ist; und
eine Archivierungsstruktur (102) zum Archivieren nur der ausgewählten Attributwerte als Attributwerte (300A).

7. System nach Anspruch 6, wobei der Objekttyp (301) die Struktur des Datenobjektes (300) definiert.

8. System nach Anspruch 7, wobei das Betriebssystem (101) ein Anwendungssystem ist.

9. System nach einem der Ansprüche 6 bis 8, wobei die wenigstens eine Datenstruktur (201, 202, 203) und die Archivierungsstruktur (102) in einer Berechnungsvorrichtung gespeichert sind.

10. System nach einem der Ansprüche 6 bis 8, wobei die wenigstens eine Datenstruktur (201, 202, 203) und die Archivierungsstruktur (102) in verschiedenen Berechnungsvorrichtungen gespeichert sind, die miteinander in Verbindung stehen.

11. Archivierungscomputerprogrammerzeugnis zum Archivieren von Datenobjekten (300) in einem Computersystem (990), das eine Mehrzahl von Anweisungen umfasst, die, wenn sie in einen Speicher des Computersystems (990) geladen sind, wenigstens einen Prozessor des Computersystems (990) veranlassen, die Schritte nach einem der Ansprüche 1 bis 5 auszuführen.

## Revendications

1. Procédé mis en oeuvre par ordinateur pour archiver des objets de données (300), qui ont un type d'objet (301), le type d'objet (301) comprenant des attributs spécifiques (A1, A4, A5, A7, A8) qui peuvent prendre différentes valeurs d'attributs, et les valeurs d'attributs sont mémorisées dans au moins une structure de données (201, 202, 203) d'un système d'exploitation (101), le procédé comprenant les étapes suivantes :
fournir une structure de commande (500), dans laquelle, pour chaque type d'objet (301) qui est spécifié en tant que sujet à l'archivage, un jeu d'au moins un attribut (A1, A4, A5) est défini, tous les attributs (A1, A4, A5) dudit jeu étant également inclus dans le type d'objet (301) respectif ;
identifier un objet de données (300) pour archivage par un système informatique (990) ;
par un programme d'archivage qui utilise la structure de commande (500), sélectionner des valeurs d'attributs (300A) à partir des objets de données (300) du système d'exploitation (101) pour le jeu d'attributs (A1, A4, A5) qui est défini pour le type d'objet (301) de l'objet de données identifié (300) ; et
archiver seulement les valeurs d'attributs sélectionnées en tant que valeurs d'attributs (300A) dans une structure d'archivage (102).

2. Procédé selon la revendication 1, dans lequel le type d'objet (301) définit la structure de l'objet de données (300).

3. Procédé selon la revendication 1 ou 2, dans lequel la au moins une structure de données (201, 202, 203) et la structure d'archivage (102) sont mises en oeuvre en tant que tables de base de données relationnelle.

4. Procédé selon la revendication 1 ou 2, dans lequel la au moins une structure de données (201, 202, 203) et la structure d'archivage (102) sont mises en oeuvre en tant que structures arborescentes.

5. Procédé selon la revendication 1 ou 2, dans lequel la au moins une structure de données (201, 202, 203) et la structure d'archivage (102) sont mises en oeuvre en tant que fichiers.

6. Système informatique (990) pour archiver des objets de données (300), qui ont un type d'objet (301), le type d'objet (301) comprenant des attributs spécifiques (A1, A4, A5, A7, A8) qui peuvent prendre différentes valeurs d'attributs, et les valeurs d'attributs étant mémorisées dans au moins une structure de données (201, 202, 203) d'un système d'exploitation (101) du système informatique (990), le système informatique (990) comprenant en outre :
une structure de commande (500), dans laquelle pour chaque type d'objet (301) qui est spécifié en tant que sujet à l'archivage, un jeu d'au moins un attribut (A1, A4, A5) est défini, tous les attributs (A1, A4, A5) dudit jeu étant également inclus dans le type d'objet (301) respectif ;
un programme d'archivage qui utilise la structure de commande (500) et qui sélectionne des valeurs d'attributs (300A) à partir des objets de données (300) du système d'exploitation (101) pour le jeu d'attributs (A1, A4, A5) qui est défini pour le type d'objet (301) de l'objet de données identifié (300) ; et
une structure d'archivage (102) pour archiver seulement les valeurs d'attributs sélectionnées en tant que valeurs d'attributs (300A).

7. Système selon la revendication 6, dans lequel le type d'objet (301) définit la structure de l'objet de données (300).

8. Système selon la revendication 7, dans lequel le système d'exploitation (101) est un système d'application.

9. Système selon l'une quelconque des revendications 6 à 8, dans lequel la au moins une structure de données (201, 202, 203) et la structure d'archivage (102) sont stockées dans un dispositif informatique.

10. Système selon l'une quelconque des revendications 6 à 8, dans lequel l'au moins une structure de données (201, 202, 203) et la structure d'archivage (102) sont stockées dans différents dispositifs informatiques qui communiquent entre eux.

11. Produit de programme informatique d'archivage pour l'archivage d'objets de données (300) dans un système informatique (990), comprenant une pluralité d'instructions qui, quand elles sont chargées dans une mémoire du système informatique (990), font exécuter les étapes de l'une quelconque des revendications 1 à 5 par au moins un processeur du système informatique (990).
